# EUROPÄISCHE PATENTSCHRIFT

(11) **EP 2 087 570 B1**
(45) Veröffentlichungstag und Bekanntmachung des Hinweises auf die Patenterteilung: **19.07.2017**
(21) Anmeldenummer: 07846308.0
(22) Anmeldetag: 06.11.2007
(51) Int. Cl.: H02H 7/26, B63G 8/08, B63H 21/17, H02H 9/02

(54) **U-BOOT-GLEICHSTROMNETZ MIT HOCHLEISTUNGSENERGIESPEICHERN**
SUBMARINE DIRECT-CURRENT NETWORK COMPRISING HIGH-POWER ENERGY ACCUMULATORS
RÉSEAU DE COURANT CONTINU DE SOUS-MARIN COMPRENANT DES ACCUMULATEURS D'ÉNERGIE À PUISSANCE ÉLEVÉE

(30) Priorität: 06.11.2006 DE 102006052538
(43) Veröffentlichungstag der Anmeldung: 12.08.2009
(73) Patentinhaber: Siemens Aktiengesellschaft, 80333 München (DE); ThyssenKrupp Marine Systems GmbH, 24143 Kiel (DE)
(72) Erfinder: AHLF, Gerd, 91369 Wiesenthau (DE); BÜHNEMANN, Bernd, 91369 Wiesenthau (DE); RISIUS, Oskar, 91056 Erlangen (DE); UTESCH, Thorsten, 26427 Esens (DE)
(86) Internationale Anmeldenummer: PCT/DE2007/002023
(87) Internationale Veröffentlichungsnummer: WO 2008/055493

(56) Entgegenhaltungen:
- EP-A- 1 482 580
- EP-A- 1 484 243
- EP-A- 1 641 066
- DE-A1- 10 237 549

## Beschreibung

Die Erfindung betrifft ein U-Boot-Gleichstromnetz gemäß Patentanspruch 1 bzw. Patentanspruch 3.

Hintergrund der Erfindung ist die Entwicklung von Gleichstrom-Hochleistungsenergiespeichern mit dem Problem von erheblich erhöhten prospektiven Kurzschlussströmen und den folgenden Eigenschaften:
- erhebliche Verkürzung von Lade- und Entladezeiten
- erhebliche Erhöhung des Kurzzeit-Entladestromes Beispiele für derartige Hochleistungsenergiespeicher sindLi-Ionen-Batteriezellen, Li-Polymer-Zellen und Kombinationen davon.

Derzeit ist noch keine Lösung mit Hochleistungsenergiespeichern wie Li-Ionen-Batterien als Großanlage bekannt. Bislang wurden für Großanlagen im Wesentlichen Bleibatterien mit konventionellen Schutzorganen und Strombegrenzern (z.B. Sicherungen, Leistungsschalter, Sollschmelzstellen, etc.) verwendet. Bleibatterien sind gekennzeichnet durch große Massen und Volumen (bezogen auf die Kapazität) und erfordern einen erheblichen Pflegeaufwand sowie umfangreiche periphere Einrichtungen (z.B. Säureumwälzung). Ein solches Gleichstromnetz für U-Booten ist aus EP 1 484 243 bekannt.

Es ist deshalb Aufgabe vorliegender Erfindung, ein Gleichstromnetz für ein U-Boot mit Hochleistungsenergiespeichern wie z.B. Li-Ionen-Batterien anzugeben.

Die Lösung dieser Aufgabe gelingt erfindungsgemäß zum einen durch ein U-Boot-Gleichstromnetz mit den Merkmalen des Patentanspruchs 1 und zum anderen durch ein U-Boot-Gleichstromnetz mit den Merkmalen des Patentanspruchs 3. Vorteilhafte Ausgestaltungen sind jeweils Gegenstand der Unteransprüche.

Ein erstes erfindungsgemäßes U-Boot-Gleichstromnetz weist zwei Teilnetze auf, die über eine Netzkupplung miteinander verbindbar oder verbunden sind, wobei jedes der Teilnetze zumindest einen Generator zur Erzeugung elektrischer Energie, zumindest eine Batterie zur Speicherung elektrischer Energie und als Energieverbraucher einen Motor zum Antrieb eines Propellers des U-Bootes aufweist, wobei die Batterie mehrere parallel geschaltete Batteriegruppen umfasst, die wiederum aus jeweils mehreren Strängen aus in Reihe geschalteten Hochleistungsenergiespeicher-Batteriezellen bestehen, wobei in jeden der Stränge ein stromanstiegsbegrenzendes Schutzelement geschaltet ist und wobei ein weiteres stromanstiegsbegrenzendes Schutzelement für die Summenkurzschlussströme mehrerer Batteriegruppen vorhanden ist. Von Vorteil ist zusätzlich in Reihe zu jeder der Batteriegruppen jeweils ein Batteriegruppenschalter geschaltet.

Ein zweites erfindungsgemäßes U-Boot-Gleichstromnetz weist zwei Teilnetze auf, die über eine Netzkupplung miteinander verbindbar oder verbunden sind, wobei jedes der Teilnetze zumindest einen Generator zur Erzeugung elektrischer Energie, zumindest eine Batterie zur Speicherung elektrischer Energie und als Energieverbraucher einen Motor zum Antrieb eines Propellers des U-Bootes aufweist, wobei die Batterie mehrere parallel geschaltete Batteriegruppen umfasst, die wiederum aus jeweils mehreren Strängen aus in Reihe geschalteten Hochleistungsenergiespeicher-Batteriezellen bestehen, wobei in Reihe zu jeder der Batteriegruppen jeweils ein Batteriegruppenschalter geschaltet ist und wobei ein stromanstiegsbegrenzendes Schutzelement für die Summenkurzschlussströme mehrerer Batteriegruppen vorhanden ist. Von Vorteil ist zusätzlich in jeden der Stränge jeweils ein stromanstiegsbegrenzendes Schutzelement geschaltet.

Als Lösung wird somit ein U-Boot-Gleichstromnetz mit Schaltanlagen und gestaffeltem Schutzkonzept vorgeschlagen. Hierdurch können die bei Hochleistungsenergiespeichern möglichen erhöhten prospektiven Kurzschlussströme sicher beherrscht und dabei Rückwirkungen (z.B. Spannungseinbrüche und damit verbundene Abschaltungen) auf nicht von einem Kurzschluss betroffene Netzteile weitestgehend vermieden werden, wodurch im Kurzschlussfall die Verfügbarkeit zumindest eines Teils der Batterie aufrecht erhalten werden kann.

Es kommen Systeme mit Batteriegruppen mit mehreren Strängen und jeweils angepassten stromanstiegsbegrenzenden Schutzkombinationen wie z.B. HTS-Strombegrenzer, Leistungsschalter, elektronische Halbleiter-Strombegrenzer, Schnellschalter, etc. zum Einsatz.

Hierdurch sind folgende Vorteile erzielbar:
- Realisierung einer Batterie-Großanlage mit beherrschbaren Kurzschlussströmen von mehr als 500 kA.
- Verminderung der Wartung/Pflege gegenüber Bleibatterien bei erheblicher Verbesserung der dynamischen Energieentnahme und Ladung sowie Verbesserung des spezifischen Energie-Volumens.

Weitere Details sind im Folgenden und in den Figuren beschrieben.

Anforderungen an ein System- und Schutzkonzept für ein U-Boot-Gleichstromnetz (neu oder Modernisierung) können beispielsweise sein:
1. Betriebsspannungen bis zu DC 800V oder mehr daraus ergeben sich:
   bei max. 4,3 V/Zelle (Ladespannung) und 24 Zellen/Batteriemodul: 8 Module in Reihe: max. 826 V bei U₀≤4,2 V/Zelle: 8 Module in Reihe: max. 807 V Nennspannung U_{N}=690 V, Betriebsspannung 550...800V
2. Strangstrom max. 500 A
3. Strangkurzschlussstrom max. 20 kA (18400 A bei 40 mOhm)
4. Strangzahl max 40 (36) oder mehr
   bei max. 4 Strängen zu einer Gruppe geschaltet und 2 Teilsysteme zu je 5 Gruppen oder mehr.

Die Zeitkonstante ist dabei erhebliche bestimmend für das Schaltungskonzept.

Für jeden Strang kann ein Halbleiter-Strombegrenzer zum Einsatz kommen, einschließlich Stromanstiegsüberwachung zur Auslösung u.a. des Batterie-(bzw. Strang-)Gruppenschalters. Als Back-Up und zur Begrenzung der Summenkurzschlussströme kommt bevorzugt ein (oder mehrere) HTS(Hochtemperatur Supraleiter)-Strombegrenzer zum Einsatz.

Ein Halbleiter-Strombegrenzer muss einen Kurzschlussstrom so begrenzen, dass
a) der Strom bereits im Anstieg erfasst und frühzeitig begrenzt wird
b) durch die Induktivitäten im Batteriekreis keine unzulässig hohe Spannung induziert wird
   (ggf. "abwärts takten")

Von Vorteil wird als Strombegrenzer für die Summenkurzschlussströme ein Hochtemperatur-Supraleiter (HTS)-Strombegrenzer vorgesehen.

Der Hochtemperatur-Supraleiter (HTS)-Strombegrenzer kann beispielsweise für bis zu 40 oder mehr Stränge (10 oder mehr Gruppen) als gestaffelter Strombegrenzer mit bis zu 5 Stück integriert werden, wobei die Kühlung dezentral/teilredundant angenommen wird.

Die Verschaltung der Zellen und Batteriemodule ist so induktivitätsarm wie möglich realisiert. Das hat sowohl Vorteile für die Schaltarbeit der Schutzorgane (Leistungsschalter und Strombegrenzer) als auch für die Streufeldarmut. Besonderes Augenmerk ist dabei auf die Verschaltung der Zellen im Batteriemodul zu richten. Die Kabel bringen keine relevanten Anteile zur Gesamt-Induktivität (gegenüber Verschaltung der Zellen und Batteriemodule), allerdings wesentliche Anteile zum Widerstand (wie auch Übergangswiderstände, Meßshunts, etc.).

Es müssen deshalb mehrere Schaltungsvarianten konzipiert werden. Variationsgrößen sind dabei:
- Strangzahl
- Zellen- und Batteriemodulzahl je Strang
- Nennstrom je Strang
- Bordnetzanbindung (Fahrschiene, je Strang, direkt oder über Umformer),wobei auch hier das Bordnetzkonzept wesentlich ist,
- Systemteilung und Konzept der Trennung/Verbindung der Teilsysteme

Das Battery Management System (BMS) besteht bevorzugt aus gestaffelten Komponenten, die über Bussysteme verbunden sind:
- im Batteriemodul (für 24 Zellen/Batteriemodul), einschl. Ladungsausgleich je Zelle
- im Schaltmodul (für max 4 Stränge mit je max. 8 Batteriemodulen),
   Erfassung der Strangströme/Amperestunden sowie Datensammler der Batteriemodule/Zellen
- in der Zentraleinheit bzw. in der EMCS (Datensammlung aller Schaltmodule)

Zusätzlich ermöglicht eine direkte Verdrahtung zwischen den Komponenten eine direkte Notabschaltung auch bei nicht funktionierenden Bussystemen.

Es sind hierbei die Konfigurationen von Bordnetz und Fahranlage zu betrachten.

Die Erfindung sowie vorteilhafte Ausgestaltungen der Erfindung werden im Folgenden anhand von Ausführungsbeispielen in den Figuren näher erläutert; darin zeigen:
- FIG 1: eine Prinzipdarstellung eines erfindungsgemäßen U-Boot-Gleichstromnetzes,
- FIG 2: den genaueren Aufbau einer in FIG 1 gezeigten Batteriegruppe,
- FIG 3: eine erste Ausgestaltung des Gleichstromnetzes von FIG 1,
- FIG 4: eine zweite Ausgestaltung des Gleichstromnetzes von FIG 1,
- FIG 5: eine dritte Ausgestaltung des Gleichstromnetzes von FIG 1,
- FIG 6: eine vierte Ausgestaltung des Gleichstromnetzes von FIG 1 und
- FIG 7: das Gleichstromnetz von FIG 1 mit einer größeren Anzahl von Batteriegruppen und geänderter Anordnung der stromanstiegsbegrenzenden Schutzelemente.

### Dabei werden folgende Definitionen verwendet:

Eine "Batterie" ist eine Parallelschaltung aus Batteriegruppen, eine "Batteriegruppe" ist eine Parallelschaltung aus Batteriesträngen und ein "Batteriestrang" ist eine Reihenschaltung aus einzelnen Batteriezellen.

Die Höhe der Netzspannung ergibt sich aus der Anzahl der in Reihe geschalteten Batteriezellen. Die zur Verfügung zu stellende Leistung bzw. Energie ergibt sich aus der Anzahl der parallelgeschalteten Batterie-Gruppen bzw. -Stränge. Die sich daraus ergebenden Ströme bestimmen die Größe und schaltungstechnische Anordnung der Schalt- und Schutzorgane, auch des stromanstiegsbegrenzenden Schutzelementes. Je nach Leistung einer Gruppe (nach obiger Definition) kann es auch sein, dass zwischen den einzelnen Gruppen ein stromanstiegsbegrenzendes Schutzelement angeordnet sein kann, oder auch erst nach jeder dritten Gruppe (Variantenvielfalt).

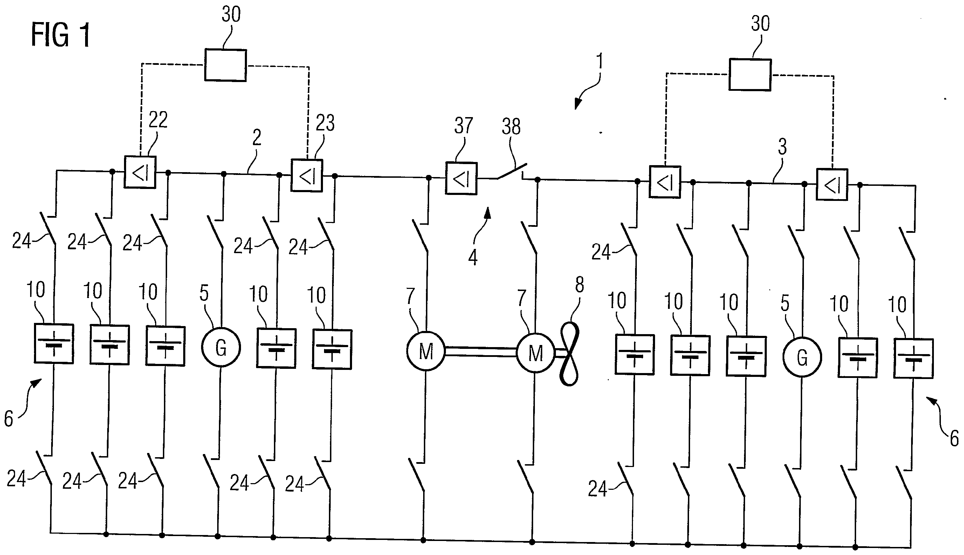

FIG 1 zeigt eine Prinzipdarstellung eines als U-Boot-Gleichstromnetz 1 ausgebildeten Inselnetzes bestehend aus zwei zueinander symmetrischen Teilnetzen 2, 3, die über eine Netzkupplung 4 miteinander verbindbar oder verbunden sind. Jedes der Teilnetze weist einen Generator 5 zur Erzeugung elektrischer Energie, eine Batterie 6 zur Speicherung der elektrischen Energie und als Energieverbraucher einen Motor 7 (z.B. einen DC-Motor oder einen DC-gespeisten Motor) zum Antrieb eines Propellers 8 des U-Bootes sowie ein nicht näher dargestelltes Bordnetz auf. Die Teilnetze können natürlich auch jeweils mehrere parallel geschaltete Generatoren und Batterien aufweisen.

Die einzelnen Komponenten der Teilnetze 2, 3 sind - wie im Folgenden näher erläutert - über ein oder mehrere Schutz- und Schaltelemente miteinander verbunden.

Die folgenden Erläuterungen beziehen sich hierbei auf das Teilnetz 2, sind aber gleichermaßen für das Teilnetz 3 gültig.

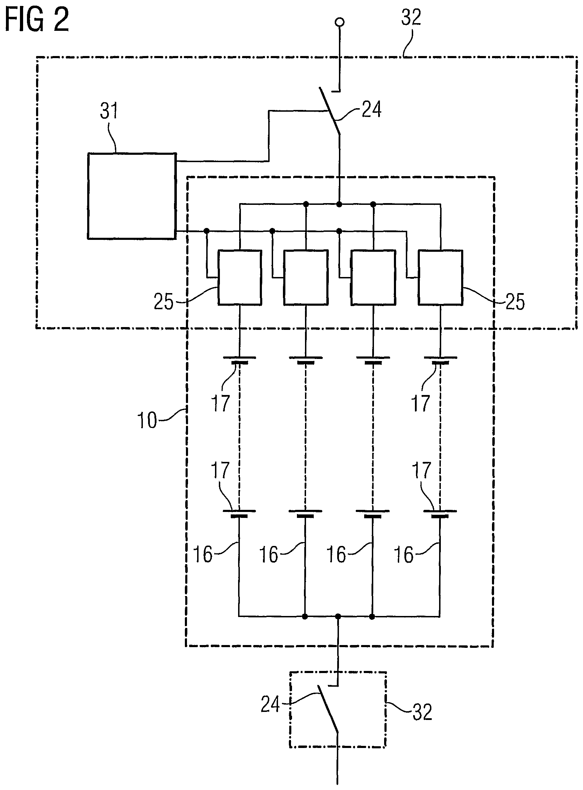

Die Batterie 6 umfasst fünf parallel geschaltete Batteriegruppen 10, die wiederum - wie in Figur 2 dargestellt - jeweils aus mehreren parallel geschalteten Strängen 16 von in Reihe geschalteten Batteriezellen 17 bestehen. Bei den Batteriezellen 17 handelt es sich um Hochleistungsenergiespeicher wie z.B. Li-Ionen-Batteriezellen, Li-Polymerbatteriezellen oder Kombinationen daraus.

Die einzelnen Stränge 16 weisen hierbei jeweils eine gleiche Anzahl gleicher Batteriezellen 17 auf. Die Höhe der Netzspannung ergibt sich somit aus der Anzahl der in den einzelnen Strängen 16 in Reihe geschalteten Batteriezellen 17 und der Höhe der Spannung der einzelnen Batteriezellen 17. Die für die Energieverbraucher zur Verfügung stehende Leistung ergibt sich aus der Anzahl der parallel geschalteten Batteriegruppen bzw. Stränge. Die sich daraus ergebenden Ströme bestimmen die Größe und schaltungstechnische Anordnung der Schalt- und Schutzelemente.

Als stromanstiegsbegrenzende Schutzelemente 22, 23 für die Summenkurzschlussströme der Batteriegruppen 10 kommen bevorzugt HTS (Hochtemperatur-Supraleiter) - Strombegrenzer zum Einsatz. Grundsätzlich können bei entsprechender Eignung für die Höhe der Summenkurzschlussströme jedoch auch andere stromanstiegsbegrenzende Schutzelemente wie z.B. Schnellschalter, Sollschmelzstellen (ggf. mit einem in Reihe geschaltetem Leistungsschalter), Halbleiterschalter oder Sicherungen bzw. Sicherungskombinationen eingesetzt werden.

Zum betriebsbedingten Zu- und Abschalten sowie zum selektiven Abschalten einzelner Batteriegruppen 10 im Falle eines Kurzschlusses ist in Reihe zu jeder der Batteriegruppen 10 ein als zweipoliger Leistungsschalter ausgebildeter Batteriegruppenschalter 24 geschaltet.

Weiterhin ist in jeden einzelnen der Batteriestränge 16 ebenfalls ein stromanstiegsbegrenzendes Schutzelement 25 geschaltet ist.

Als stromanstiegsbegrenzende Schutzelemente 25 in den einzelnen Strängen 16 kommen bevorzugt Halbleiter-Strombegrenzer zum Einsatz. Grundsätzlich können bei entsprechender Eignung für die Höhe der Kurzschlussströme jedoch auch andere stromanstiegsbegrenzende Schutzelemente wie z.B. Schnellschalter, Sollschmelzstellen oder Sicherungen bzw. Sicherungskombinationen eingesetzt werden.

Bevorzugt sind die beiden Teilnetze 2, 3 über eine Netzkupplung 4 mit einem stromanstiegsbegrenzenden Schutzelement 37, insbesondere einem HTS-Strombegrenzer, miteinander verbunden oder verbindbar. Im Falle eines HTS-Strombegrenzers ist von Vorteil in Reihe zu dem HTS-Strombegrenzer ein Leistungsschalter 38 geschaltet. Ein über die Netzkupplung 4 fließender Kurzschlussstrom kann dann mittels des HTS-Strombegrenzers begrenzt und mittels des Leistungsschalters abgeschaltet werden.

Eine übergeordnete Batterie-Überwachungseinrichtung 30 dient zur Überwachung der Stromanstiege in den stromanstiegsbegrenzenden Schutzelementen 22, 23 auf Überschreitung eines jeweils vorgegeben Grenzwertes.

Zusätzlich weist jede der Batteriegruppen 10 jeweils eine Strang-Überwachungseinrichtung 31 zur Überwachung der stromanstiegsbegrenzende Schutzelemente 25 der einzelnen Batteriestränge 16 der Batteriegruppe auf Überschreitung eines vorgegebenen Grenzwertes auf (siehe Fig.2).

Die Strang-Überwachungseinrichtung 31 dient weiterhin als Sammler von Betriebsdaten der Batteriezellen der jeweiligen Batteriestränge 16.

Die Strang-Überwachungseinrichtungen 31 der einzelnen Batteriegruppen 10 sind über eine nicht näher dargestellte Kommunikationsverbindung, z.B. einen Kommunikationsbus, mit der übergeordneten Batterie-Überwachungseinrichtung 30 verbunden und melden darüber die gesammelten Betriebsdaten der Batteriezellen an die übergeordnete Batterie-Überwachungseinrichtung 30 bzw. empfangen von der übergeordneten Batterie-Überwachungseinrichtung 30 Ausschaltbefehle für den jeweiligen Batteriegruppenschalter 24.

Der Batteriegruppenschalter 24, die stromanstiegsbegrenzenden Schutzelemente 25 der einzelnen Batteriestränge 16 und die Strang-Überwachungseinrichtung 31 einer Batteriegruppe sind gemeinsam in einem gekapselten Schaltmodul 32 untergebracht.

Auch die Batteriestränge 16 können aus jeweils einem oder mehreren Batteriemodulen bestehen.

Ein bestehendes U-Boot-Gleichstromnetz mit konventionellen Energiespeichern kann dann im Rahmen einer Modernisierung mit Hilfe derartiger Module besonders einfach und flexibel mit Hochleistungsenergiespeichern ausgestattet werden.

### Beispiel für eine vorteilhafte Ausgestaltung eines Schaltmoduls 32:

LxBxH =1300x1000x1000, Gewicht = 0,6 t

Eigenschaften und Bestandteile:
- Kurzschlußschutz und Zuschaltung der Batteriegruppe
- gekapselt und druckfest, Schutzart IP54 (eventuell Schutzgasfüllung), im Ausblasraum isolierend verkleidet, eventuell geteilte Räume mit internem Druckausgleich (Membran, Ventil) ggf. Überdruckventil mit Partikelfilter und Evakuierungsanschluß
- 1 Stück 2-poliger Leistungsschalter 24, ggf. Halbleiter-Strombegrenzer 25 je Strang,
- Kondensatorauslöser zum Triggern durch die HTS-Stromerfassung
- Shunts für die Strangströme (max. 4 für max. 480 A/Strang)
- Datensammler BMS für bis zu 4x8x24Zellen (=768), sowie Verarbeitung Strangstrom/Amperestunden

### Umrüstung bestehender Anlagen

Grundsätzlich sollte hierbei die E-Anlage (Hauptschalttafel und Verteilung) nicht geändert werden müssen. Alle Modifikationen sollten sich im Bereich der Batterie/Batterieräume abspielen.

Dadurch sind "standardisierte" Komponenten notwendig, welche entweder anstelle existierender Batterieschalteinrichtungen eingesetzt werden können oder im Kopfbereich von Batterieräumen, da die Li-Ionen-Zellen weniger Platz benötigen (was letztendlich zu Lasten der möglichen Kapazitätserweiterung geht).

Als "standardisierte" Komponente kann je Batteriegruppe ein "gekapseltes Schaltmodul" vorgesehen werden, bestehend aus:
- 1 Leistungsschalter
- 1 Satz Strombegrenzer je Strang
- 1 BMS-Einheit (Battery-Management-System)
Die Kapselung soll einen Betrieb im Batterieraum ermöglichen, wobei die Anforderungen gegenüber Bleibatterien reduziert werden können, da insbesondere keine Wasserstoffentwicklung zu berücksichtigen ist (also kein Ex-Schutz notwendig).

Je nach Anzahl der Batteriestränge (z.B. bei mehr als 8 Batteriesträngen) sind ggf. zusätzlich HTS-Strombegrenzer einzuplanen.

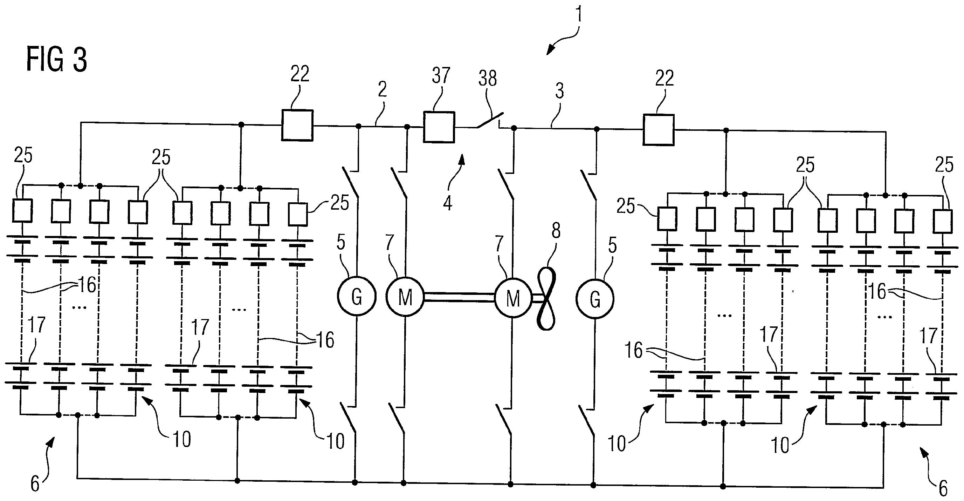

Bei einem in FIG 3 gezeigten Gleichstromnetz 1 besteht eine Batterie 6 eines Teilnetzes 2, 3 aus zwei parallel geschalteten Batteriegruppen 10, wobei jede der Batteriegruppen 10 aus mehreren parallel geschalteten Strängen 16 (z.B. 10 Stränge oder mehr) von in Reihe geschalteten Batteriezellen 17 besteht. Jeder der Stränge 16 weist ein stromanstiegsbegrenzendes Schutzelement 25, z.B. einen Halbleiter-Strombegrenzer, eine Sollschmelzstelle (ggf. mit einem in Reihe geschaltetem Leistungsschalter), einen Schnellschalter oder eine Sicherung bzw. Sicherungskombination, auf.

Zusätzlich ist in Reihe zu den beiden Batteriegruppen 10 einer Batterie 6 eines Teilnetzes 2, 3 ein weiteres stromanstiegsbegrenzendes Schutzelement 22, z.B. ein HTS-Strombegrenzer, eine Sollschmelzstelle (ggf. mit einem in Reihe geschaltetem Leistungsschalter), ein Schnellschalter oder eine Sicherung bzw. Sicherungskombination, für die Summenkurzschlussströme der beiden Batteriegruppen 10 geschaltet.

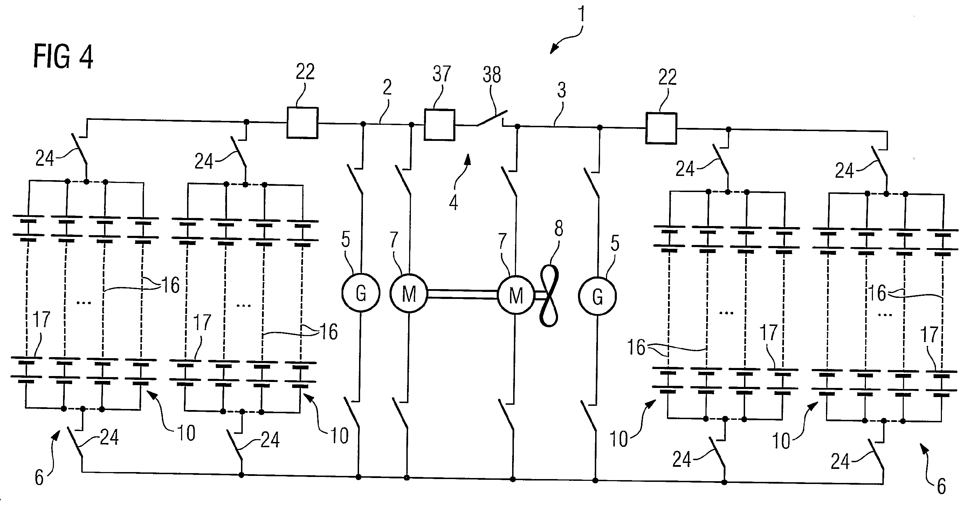

Bei einem in FIG 4 gezeigten Gleichstromnetz 1 besteht eine Batterie 6 eines Teilnetzes 2, 3 ebenfalls aus zwei parallel geschalteten Batteriegruppen 10, wobei jede der Batteriegruppen 10 aus mehreren parallel geschalteten Strängen 16 (z.B. 10 Stränge oder mehr) von in Reihe geschalteten Batteriezellen 17 besteht. In Reihe zu der Parallelschaltung der beiden Batteriegruppen 10 einer Batterie 6 eines Teilnetzes 2, 3 ist ein stromanstiegsbegrenzendes Schutzelement 22, z.B. ein HTS-Strombegrenzer, eine Sollschmelzstelle (ggf. mit einem in Reihe geschaltetem Leistungsschalter, ein Schnellschalter oder eine Sicherung bzw. Sicherungskombination) für die Summenkurzschlussströme der beiden Batteriegruppen 10 geschaltet. Zusätzlich ist in Reihe zu jeder der Batteriegruppen 10 jeweils ein Batteriegruppenschalter 24, z.B. ein Leistungsschalter, geschaltet. Der Batteriegruppenschalter 24 ermöglicht eine galvanische Trennung einer Batteriegruppe 10 von dem Netz 1.

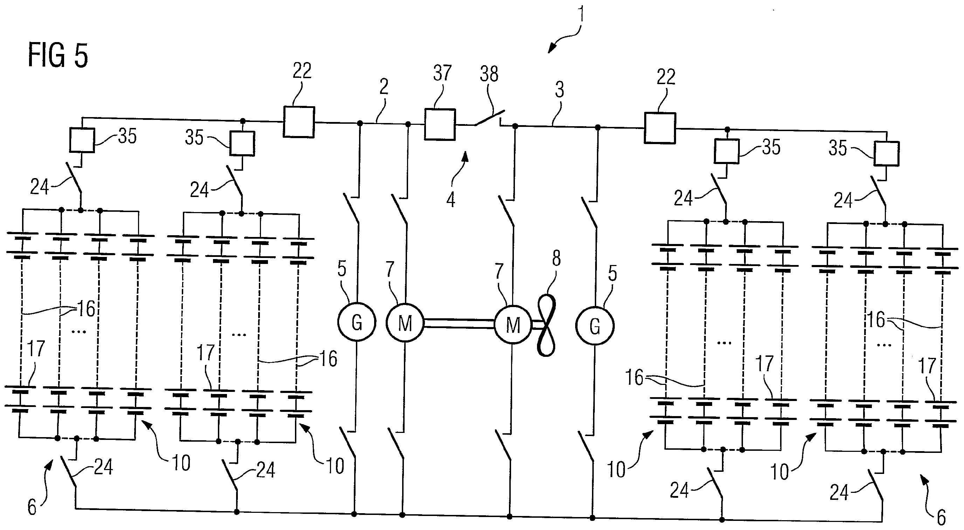

In Reihe zu dem Batteriegruppenschalter 24 kann hierbei zusätzlich noch, wie in FIG 5 dargestellt, ein HTS-Strombegrenzer 35 geschaltet sein. Hierdurch ist im Kurzschlussfall eine sehr schnelle resistive Begrenzung der Kurzschlussströme möglich, so dass Rückwirkungen auf nicht von dem Kurzschluss betroffene Stränge, wie z.B. Spannungseinbrüche oder Abschaltungen der Stränge, vermieden werden können.

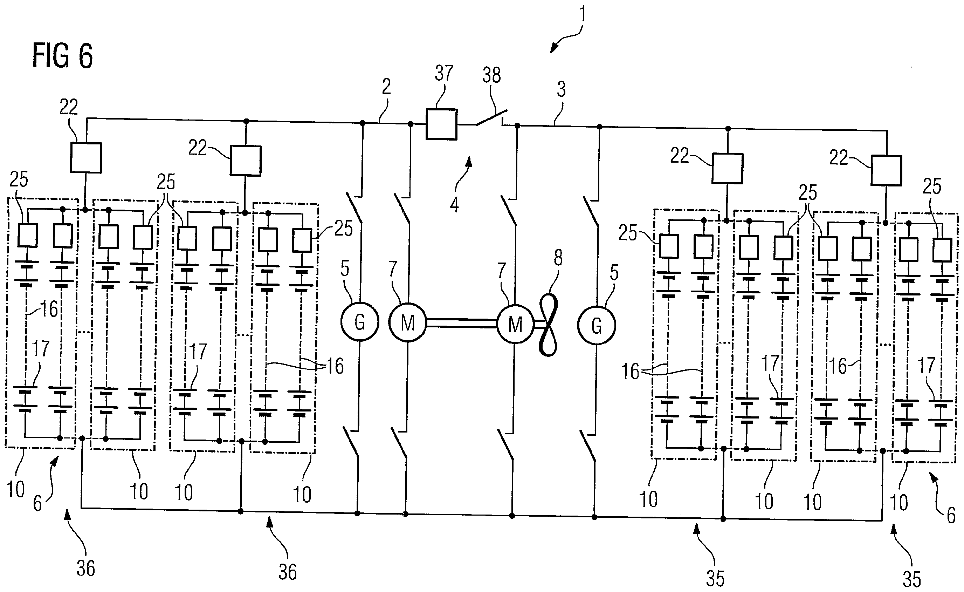

Wie in FIG 6 dargestellt, können auch mehrere parallel geschaltete Batteriegruppen 10 zu einer Teilbatterie 35 zusammengefasst und in Reihe zu der Teilbatterie 35 (d.h. in Reihe zu der Parallelschaltung der Batteriegruppen 10 der Teilbatterie 35) ein stromanstiegsbegrenzendes Schutzelement 22 für die Summenkurzschlussströme der zu der Teilbatterie 35 zusammengefassten Batteriegruppen 10 geschaltet sein. In einem Kurzschlussfall kann dann die jeweils betroffene Teilbatterie 35 vom Netz geschaltet werden, während alle anderen Teilbatterien 35 zugeschaltet bleiben können.

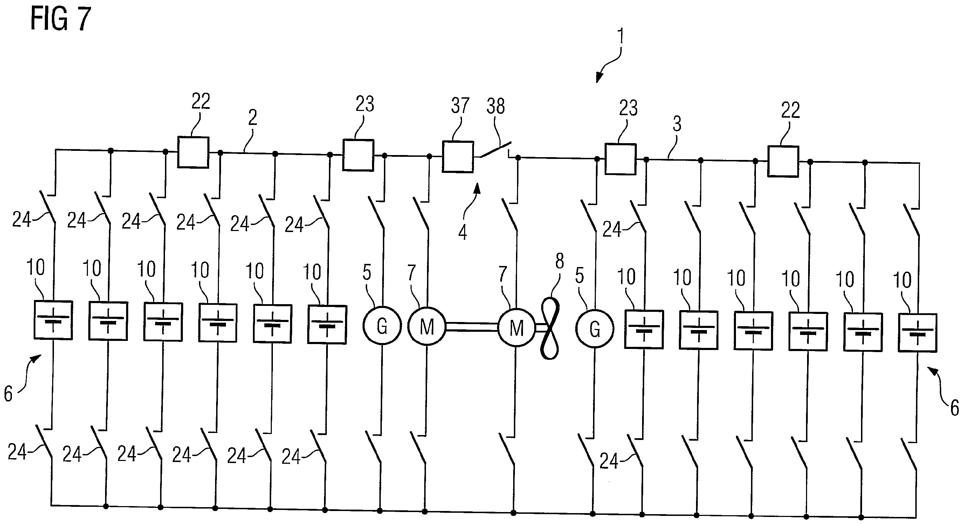

Für alle gezeigten Ausführungsbeispiele gilt, dass die tatsächliche Anzahl vorhandener Batteriegruppen 10 und Batteriestränge 16 sowie die Anordnung der Schutzelemente variieren kann und abhängig ist von der zur Verfügung zu stellenden Leistung bzw. Energie. Figur 7 zeigt hierzu beispielhaft das Gleichstromnetz 1 von Figur 1, wobei jedoch eine Batterie 6 nunmehr sechs Batteriegruppen 10 statt nur fünf Batteriegruppen 10 aufweist und die Batteriegruppen 10 und die strombegrenzenden Schutzelemente 22, 23 für die Summenkurzschlussströme leicht geändert in dem Netz 1 angeordnet sind.

## Patentansprüche

1. U-Boot-Gleichstromnetz (1) mit zwei Teilnetzen (2, 3), die über eine Netzkupplung (4) miteinander verbindbar oder verbunden sind, wobei jedes der Teilnetze (2,3) zumindest einen Generator (5) zur Erzeugung elektrischer Energie, zumindest eine Batterie (6) zur Speicherung elektrischer Energie und
als Energieverbraucher einen Motor (7) zum Antrieb eines Propellers (8) des U-Bootes aufweist, **dadurch gekennzeichnet, dass** die Batterie (6) mehrere parallel geschaltete Batteriegruppen (10) umfasst, die wiederum aus jeweils mehreren Strängen (16) aus in Reihe geschalteten Hochleistungsenergiespeicher-Batteriezellen (17) bestehen, wobei in jeden der Stränge (16) ein stromanstiegsbegrenzendes Schutzelement (25) geschaltet ist und wobei ein weiteres stromanstiegsbegrenzendes Schutzelement (22, 23) für die Summenkurzschlussströme mehrerer Batteriegruppen (10) vorhanden ist.

2. U-Boot-Gleichstromnetz (1) nach Anspruch 1, **dadurch gekennzeichnet, dass** in Reihe zu jeder der Batteriegruppen (10) jeweils ein Batteriegruppenschalter (24) geschaltet ist.

3. U-Boot-Gleichstromnetz (1) mit zwei Teilnetzen (2, 3), die über eine Netzkupplung (4) miteinander verbindbar oder verbunden sind, wobei jedes der Teilnetze (2,3) zumindest einen Generator (5) zur Erzeugung elektrischer Energie, zumindest eine Batterie (6) zur Speicherung elektrischer Energie und als Energieverbraucher einen Motor (7) zum Antrieb eines Propellers (8) des U-Bootes aufweist, **dadurch gekennzeichnet, dass** die Batterie (6) mehrere parallel geschaltete Batteriegruppen (10) umfasst, die wiederum aus jeweils mehreren Strängen (16) aus in Reihe geschalteten Hochleistungsenergiespeicher-Batteriezellen (17) bestehen, wobei in Reihe zu jeder der Batteriegruppen jeweils ein Batteriegruppenschalter (24) geschaltet ist und wobei ein stromanstiegsbegrenzendes Schutzelement (22, 23) für die Summenkurzschlussströme mehrerer Batteriegruppen (10) vorhanden ist.

4. U-Boot-Gleichstromnetz (1) nach Anspruch 3, **dadurch gekennzeichnet, dass** in jeden der Stränge (16) jeweils ein stromanstiegsbegrenzendes Schutzelement (25) geschaltet ist.

5. U-Boot-Gleichstromnetz (1) nach einem der vorhergehenden Ansprüche, **dadurch gekennzeichnet, dass** zwischen einzelne Batteriegruppen (10) oder zwischen mehrere Batteriegruppen (10) ein stromanstiegsbegrenzendes Schutzelement (22, 23) geschaltet ist.

6. U-Boot-Gleichstromnetz (1) nach einem der vorhergehenden Ansprüche, **dadurch gekennzeichnet, dass** das stromanstiegsbegrenzende Schutzelement (22, 23) für die Summenkurzschlussströme als ein HTS-Strombegrenzer ausgebildet ist.

7. U-Boot-Gleichstromnetz (1) nach Anspruch 1 oder 4, **dadurch gekennzeichnet, dass** die in die Stränge geschalteten stromanstiegsbegrenzenden Schutzelemente (25) als Halbleiter-Strombegrenzer ausgebildet sind.

8. U-Boot-Gleichstromnetz (1) nach einem der Ansprüche 2 oder 3, **dadurch gekennzeichnet, dass** der Batteriegruppenschalter (24) als ein Leistungsschalter ausgebildet ist.

9. U-Boot-Gleichstromnetz (1) nach einem der Ansprüche 2, 3 oder 8, **dadurch gekennzeichnet, dass** in Reihe zu dem Batteriegruppenschalter (24) ein HTS-Strombegrenzer (35) geschaltet ist.

10. U-Boot-Gleichstromnetz (1) nach einem der vorhergehenden Ansprüche, **gekennzeichnet durch** eine übergeordnete Batterie-Überwachungseinrichtung (30) zur Überwachung der Stromanstiege in den stromanstiegsbegrenzenden Schutzelementen (22, 23) für die Summenkurzschlussströme auf Überschreiten eines vorgegebenen Grenzwertes.

11. U-Boot-Gleichstromnetz (1) nach einem der vorhergehenden Ansprüche, **dadurch gekennzeichnet, dass** jede der Batteriegruppen (10) jeweils eine Strang-Überwachungseinrichtung (31) zur Überwachung der stromanstiegsbegrenzenden Schutzelemente (25) der einzelnen Batteriestränge (16) der Batteriegruppe auf Überschreitung eines vorgegebenen Grenzwertes aufweist.

12. U-Boot-Gleichstromnetz (1) nach einem der vorhergehenden Ansprüche, **dadurch gekennzeichnet, dass** der Batteriegruppenschalter (24), die stromanstiegsbegrenzenden Schutzelemente (25) der einzelnen Batteriestränge (16) und die Strang-Überwachungseinrichtung (31) einer Batteriegruppe (10) gemeinsam in einem gekapselten Schaltmodul (32) untergebracht sind.

13. U-Boot-Gleichstromnetz (1) nach einem der vorhergehenden Ansprüche, **dadurch gekennzeichnet, dass** die Batterienzellen (17) der Batteriegruppen (10) aus Li-Ionen-Batteriezellen, Li-Polymerbatteriezellen oder Kombinationen daraus bestehen.

14. U-Boot-Gleichstromnetz (1) nach einem der vorhergehenden Ansprüche, **dadurch gekennzeichnet, dass** die beiden Teilnetze (2, 3) über eine Netzkupplung (4) mit einem stromanstiegsbegrenzenden Schutzelement, insbesondere einem HTS-Strombegrenzer, miteinander verbunden oder verbindbar sind.

## Claims

1. Submarine direct-current network (1) with two subnetworks (2, 3), which can be or are connected to one another by way of a network coupling (4), wherein each of the subnetworks (2, 3) has at least one generator (5) for generating electrical energy, at least one battery (6) for storing electrical energy and as an energy user a motor (7) for driving a propeller (8) of the submarine, **characterised in that** the battery (6) comprises a number of battery groups (10) connected in parallel, which in turn consist of in each case a number of strands (16) from high-power energy accumulator battery cells (17) that are connected in series, wherein a current-increase-limiting protective element (25) is switched in each of the strands (16) and wherein a further current-increase-limiting protective element (22, 23) exists for the total short-circuit currents of a number of battery groups (10).

2. Submarine direct-current network (1) according to claim 1, **characterised in that** a battery group switch (24) is connected in series with each of the battery groups (10) in each case.

3. Submarine direct-current network (1) with two subnetworks (2, 3), which can be or are connected to one another by way of a network coupling (4), wherein each of the subnetworks (2, 3) has at least one generator (5) for generating electrical energy, at least one battery (6) for storing electrical energy and as an energy user a motor (7) for driving a propeller (8) of the submarine, **characterised in that** the battery (6) comprises a number of battery groups (10) that are connected in parallel, which consist in turn of in each case a number of strands (16) of high-power energy accumulators (17) that are connected in series, wherein a battery group switch (24) is connected in series with each of the battery groups in each case and wherein a current-increase-limiting protective element (22, 23) exists for the total short-circuit currents of a number of battery groups (10).

4. Submarine direct-current network (1) according to claim 3, **characterised in that** a current-increase-limiting protective element (25) is switched in each of the strands (16) in each case.

5. Submarine direct-current network (1) according to one of the preceding claims, **characterised in that** a current-increase-limiting protective element (22, 23) is switched between individual battery groups (10) or between a number of battery groups (10).

6. Submarine direct-current network (1) according to one of the preceding claims, **characterised in that** the current-increase-limiting protective element (22, 23) for the total short-circuit currents is embodied as an HTS current limiter.

7. Submarine direct-current network (1) according to claim 1 or 4, **characterised in that** the current-increase-limiting protective elements (25) switched in the strands are embodied as semiconductor current limiters.

8. Submarine direct-current network (1) according to one of claims 2 or 3, **characterised in that** the battery group switch (24) is embodied as a circuit breaker.

9. Submarine direct-current network (1) according to one of claims 2, 3 or 8, **characterised in that** an HTS current limiter (35) is connected in series with the battery group switch (24).

10. Submarine direct-current network (1) according to one of the preceding claims, **characterised by** a higher-order battery monitoring device (30) for monitoring the current increases in the current-increase-limiting protective elements (22, 23) for the total short-circuit currents in terms of exceeding a predetermined limit value.

11. Submarine direct-current network (1) according to one of the preceding claims, **characterised in that** each of the battery groups (10) in each case has a strand monitoring device (31) for monitoring the current-increase-limiting protective elements (25) of the individual battery strands (16) of the battery group in terms of exceeding a predetermined limit value.

12. Submarine direct-current network (1) according to one of the preceding claims, **characterised in that** the battery group switch (24), the current-increase-limiting protective elements (25) of the individual battery strands (16) and the strand monitoring device (31) of a battery group (10) are accommodated together in an encapsulated switching module (32).

13. Submarine direct-current network (1) according to one of the preceding claims, **characterised in that** the battery cells (17) of the battery groups (10) consist of lithium ion battery cells, lithium polymer battery cells or combinations of the two.

14. Submarine direct-current network (1) according to one of the preceding claims, **characterised in that** the two subnetworks (2, 3) are or can be connected to one another by way of a network coupling (4) with a current-increase-limiting protective element, in particular an HTS current limiter.

## Revendications

1. Réseau (1) à courant continu de sous-marin, comprenant deux sous-réseaux (2, 3), qui sont reliés entre eux par un couplage (4) de réseau ou qui peuvent l'être, chacun des sous-réseaux (2, 3) ayant au moins une génératrice (5) de production d'énergie électrique, au moins une batterie (6) d'accumulation d'énergie électrique et, comme consommateur d'énergie, un moteur (7) pour l'entraînement d'une hélice (8) du sous-marin, **caractérisé en ce que** la batterie (6) comprend plusieurs groupes (10) de batterie montés en parallèle, qui sont constitués à leur tour de respectivement plusieurs branches (16) d'éléments (17) de batterie d'accumulateur d'énergie de grande puissance montés en série, dans lequel, dans chacune des branches (16), est monté un élément (25) de protection limitant une augmentation de courant et dans lequel il y a un autre élément (22, 23) de protection limitant une augmentation de courant, pour les sommes de courant de court-circuit de plusieurs groupes (10) de batterie.

2. Réseau (1) à courant continu de sous-marin suivant la revendication 1, **caractérisé en ce que** respectivement un interrupteur (24) de groupe de batterie est monté en série avec chacun des groupes (10) de batterie.

3. Réseau (1) à courant continu de sous-marin, comprenant deux sous-réseaux (2, 3), qui sont reliés entre eux par un couplage (4) de réseau ou qui peuvent l'être, chacun des sous-réseaux (2, 3) ayant au moins une génératrice (5) de production d'énergie électrique, au moins une batterie (6) d'accumulation d'énergie électrique et, comme consommateur d'énergie, un moteur (7) pour l'entraînement d'une hélice (8) du sous-marin, **caractérisé en ce que** la batterie (6) comprend plusieurs groupes (10) de batterie montés en parallèle qui, à leur tour, sont constitués de respectivement plusieurs branches (16) d'éléments (17) de batterie d'accumulateur d'énergie de grande puissance montés en série, dans lequel il est monté en série avec chacun des groupes de batterie, respectivement un interrupteur (24) de groupe de batterie et dans lequel il y a un élément (22, 23) de protection limitant l'augmentation de courant pour la somme des courants de court-circuit de plusieurs groupes (10) de batterie.

4. Réseau (1) à courant continu de sous-marin suivant la revendication 3, **caractérisé en ce que** respectivement un élément (25) de protection limitant l'augmentation de courant est monté dans chacune des branches (16).

5. Réseau (1) à courant continu de sous-marin suivant l'une des revendications précédentes, **caractérisé en ce qu'**un élément (22, 23) de protection limitant une augmentation de courant est monté entre divers groupes (10) de la batterie ou entre plusieurs groupes (10) de la batterie.

6. Réseau (1) à courant continu de sous-marin suivant l'une des revendications précédentes, **caractérisé en ce que** l'élément (21) de protection limitant une augmentation de courant, pour la somme des courants de court-circuit, est constitué sous la forme d'un limiteur de courant HTS.

7. Réseau (1) à courant continu de sous-marin suivant la revendication 1 ou 4, **caractérisé en ce que** les éléments (25) de protection limitant une augmentation du courant, montés dans les branches, sont constitués sous la forme de limiteurs de courant à semi-conducteur.

8. Réseau (1) à courant continu de sous-marin suivant l'une des revendications 2 ou 3, **caractérisé en ce que** l'interrupteur (24) de groupe de batterie est constitué sous la forme d'un disjoncteur.

9. Réseau (1) à courant continu de sous-marin suivant l'une des revendications 2, 3 ou 8, **caractérisé en ce qu'**un limiteur (35) de courant HTS est monté en série avec l'interrupteur (24) de groupe de batterie.

10. Réseau (1) à courant continu de sous-marin suivant l'une des revendications précédentes, **caractérisé par** un dispositif (30) de contrôle de batterie supérieur hiérarchiquement, pour contrôler l'augmentation de courant dans les éléments (22, 23) de protection limitant l'augmentation de courant, pour la somme des courants de court-circuit, en vue de contrôler un dépassement d'une valeur limite donnée à l'avance.

11. Réseau (1) à courant continu de sous-marin suivant l'une des revendications précédentes, **caractérisé en ce que** chacun des groupes (10) de la batterie a respectivement un dispositif (31) de contrôle de branche, pour contrôler les éléments (25) de protection limitant une augmentation du courant, des diverses branches (16) du groupe de la batterie, en vue de contrôler un dépassement d'une valeur limite donnée à l'avance.

12. Réseau (1) à courant continu de sous-marin suivant l'une des revendications précédentes, **caractérisé en ce que** l'interrupteur (24) de groupe de la batterie, des éléments (25) de protection limitant l'augmentation du courant des diverses branches (16) de la batterie et le dispositif (31) de contrôle de branche d'un groupe (10) de la batterie sont logés conjointement dans un module (32) de commutation blindé.

13. Réseau (1) à courant continu de sous-marin suivant l'une des revendications précédentes, **caractérisé en ce que** les éléments (17) de la batterie des groupes (10) de la batterie sont constitués d'éléments de batterie Li-ion, d'éléments de batterie Li-polymère ou de leur combinaison.

14. Réseau (1) à courant continu de sous-marin suivant l'une des revendications précédentes, **caractérisé en ce que** les deux sous-réseaux (2, 3) sont reliés entre eux par un couplage (4) de réseau, ayant un élément de protection limitant une augmentation du courant, notamment un limiteur de courant HTS, ou peuvent l'être.
